# EUROPEAN PATENT APPLICATION

(11) **EP 1 772 235 A1**
(43) Date of publication of application: **11.04.2007**
(21) Application number: 05767136.4
(22) Date of filing: 28.07.2005
(51) Int. Cl.: B25J 5/00, B25J 13/08

(54) **MULTI-POINT GROUND CONTACT TYPE FOOT PART SUPPORT MECHANISM, BIPEDAL WALKING ROBOT HAVING THE SUPPORT MECHANISM, AND CONTROL STRUCTURE FOR THE ROBOT**

(30) Priority: 30.07.2004 JP 2004224565
(71) Applicant: TMSUK Co., Ltd., Kitakyushu-shi, Fukuoka 803-0851 (JP); Takanishi, Atsuo, Tokyo 165-0024 (JP)
(72) Inventor: HASHIMOTO, Kenji, Hachioji-shi, Tokyo 1920354 (JP); OHTA, Akihiro, Nerima-ku, Tokyo 1770045 (JP); HOSOBATA, Takuya, Yokohama-shi, Kanagawa 2360012 (JP); SUGAHARA, Yusuke, Matsudo-shi, Chiba 2700034 (JP); MIKURIYA, Yutaka, Kanagawa 2380023 (JP); KAWASE, Masamiki, Nakano-ku, Tokyo 1650034 (JP); SUNAZUKA, Hiroyuki, Kanagawa 2291135 (JP); TANAKA, Chiaki, Mitaka-shi, Tokyo 1810003 (JP); TAKAMOTO, Yoichi, TMSUK CO., LTD., Kitakyushu-shi, Fukuoka 8030851 (JP); BABA, Katsuyuki, TMSUK CO., LTD., Kitakyushu-shi, Fukuoka 8030851 (JP); INO, Shigeaki, TMSUK CO., LTD., Kitakyushu-shi, Fukuoka 8030851 (JP)
(74) Representative: HOFFMANN EITLE
(86) International application number: PCT/JP2005/013882
(87) International publication number: WO 2006/011577

(57) **Abstract**

The present invention provides a multiple-point grounding type foot portion supporting mechanism having excellent reliability, in which the respective supporting points passively follow unevenness of the grounding surface such as a road surface, and which is capable of quickly supporting foot bottoms at polygonal points and preventing falling over even on a grounding surface having level differences by fixing the supporting points when all supporting points are grounded. The multiple-point grounding type foot portion supporting mechanism includes: base portions each disposed on the foot bottom of the foot portion of a walking robot; three or more foot bottom supporting portions each having its one end part disposed and protruding downward from the bottom face of the base portion, each of which independently moves upward when being grounded and is slidably or rotatably supported; grounding sensors each disposed at the base portion or the foot bottom supporting portion, which detect grounding of the respective foot bottom supporting portions; and lock mechanisms disposed at the base portion, which control and brake the movements of all foot bottom supporting portions when the grounding sensors detect grounding of all foot bottom supporting portions.

## Description

### Field of the Invention

The present invention relates to a multiple-point grounding type foot portion supporting mechanism that forms a virtual supporting polygon in the plane of a foot bottom and supports the foot bottom at polygonal points, a biped walking robot equipped with the same, and a control structure therefor.

### Background of the Invention

In recent years, a human-type robot actively used in living environments of human beings, a so-called "humanoid robot," has been frequently researched and developed. There are many cases where the humanoid robot is used not only for industrial production but also for housework, nursing of the aged, and making human lives comfortable. In order to cause the robot to work close to unspecified users in an environment that has been created for human beings, it is necessary for the robot to have shapes and features suitable therefor. In addition, it has been demanded that the robot is provided with a safe and flexible interface without requiring any special training for use. That is, there are still a number of subjects to be researched. In particular, biped walking robots each having two legs as movingmeans as in human beings and capable of carrying out biped walking have actively been researched and developed by a number of research laboratories and business firms.
Patent Document 1, which has been filed by the present applicant, discloses a module of the lower part of a biped walking robot including: a base portion; a right foot portion and a left foot portion; a plurality of passive joints disposed between the base portion, the right foot portion and the left foot portion; and parallel link mechanism portions each disposed between a passive joint disposed at the base portion and the passive joint disposed at the right foot portion and between a passive joint disposed at the base portion and the passive joint disposed at the left foot portion.
Further, Patent Document 2, which has also been filed by the present applicant, discloses a walking pattern preparation unit for preparing a walking pattern of a biped walking robot, which sets a target zero moment point at a foot portion and calculates a moment compensating locus at the waist portion in response to the set target zero moment point.
Patent Document 1: Japanese Published Unexamined Patent Application No. 2003-291080
Patent Document 2: Japanese Published Unexamined Patent Application No. 2004-82223

### Disclosure of the Invention

### Problems to be Solved by the Invention

In the module of the lower part of the biped walking robot described in Patent Document 1, by composing the leg portions by the parallel link mechanism portion, the leg portion is capable of withstanding a large load, conveying a heavy object, is excellent in practical use, and is capable of having the upper part thereof incorporated or assembled therein, the weight of which is heavy, and is excellent in the degree of freedom in design. Also, by providing the module with a walking pattern preparing unit described in Patent Document 2, it is possible to prepare a walking pattern by which stable biped walking can be carried out. In particular, the robot brings about an action and an effect by which stability in walking motions is excellent on a flat grounding surface. However, further improvement in stability in motions and realization of actions according to various grounding forms are demanded.
In detail,
(1) In a place where it is difficult for the respective legs to secure a flat grounding surface, such as a remarkably uneven place where it is not possible for a wheel-moving type robot, which is capable of moving at a high speed and is excellent in energy efficiency, to enter, and a place where it is not possible to secure a wide supporting base surface necessary for a multi-legged robot, it is not possible to predict, with a rigid and flat foot bottom that is employed in many of conventional biped walking robots, how a supporting polygon (a convex polygon at which the area formed by the grounding points of a foot bottom is the maximum) for supporting the foot bottom is formed when a projected object is stepped on by the center of the foot bottom, wherein there is a problem that falling over cannot be prevented.
(2) Further, provisionally where it was possible to predict the supporting polygon, since the area of the formed supporting polygon is narrow, it is difficult to continue stable walking, wherein the sway is increased as the walking is continued, and finally the robot falls over. Therefore, there is another problem that the walking stability and reliability are insufficient.

The present invention was developed to solve the above-described problems. It is an object of the present invention to provide a multiple-point grounding type foot portion supporting mechanism having excellent reliability, which can be easily attached to a foot bottom of the existing biped walking robot, etc., and can quickly support the foot bottom at multiple points on an level difference of a grounding surface by passively following the contours of the grounding surface such as a road surface, and controlling the movement of the supporting points when all supporting points are grounded, and which can prevent the robot from falling over, it is another object of the present invention to provide a biped walking robot equipped with a multiple-point grounding type foot portion supporting mechanism having excellent stability and versatility in a walking motion, which is able to operate even on a complicated grounding form, which has unevenness or level differences, and it is still another object of the present invention to provide a control structure therefor.

### Means for Solving the Objects

In order to achieve the above-described objects, a multiple-point grounding type foot portion supporting mechanism according to the present invention, a biped walking robot equipped with the same, and a control structure therefor have the following configuration.
A multiple-point grounding type foot portion supporting mechanism according to Claim 1 of the invention includes: base portions each disposed on the foot bottom of a leg portion of a walking robot; three or more foot bottom supporting portions each having its end part disposed and protruding downward from the bottom face of the base portion, each of which independently moves upward when being grounded and is slidably or rotatably supported; grounding sensors each disposed at the base portion or the foot bottom supporting portion, which detects grounding of the foot bottom supporting portion; and lock mechanisms disposed at the base portion, which control and brake the movements of all foot bottom supporting portions when the grounding sensors detect the grounding of all foot bottom supporting portions.
With the construction, the following actions are brought about.
(1) Since the end part is disposed and protruding downward from the bottom face of the base portion disposed on the foot bottom of the walking robot and three or more foot bottom supporting portions are provided, which independently move upward when being grounded and are slidably or rotatably supported, the respective foot bottom supporting portions move in the direction along which the protrusion amount from the foot bottom (the bottom face of the base portion) is reduced, passively following the contours of the grounding surface. Therefore, the lock mechanism controls and brakes movement of all foot bottom supporting portions when the grounding sensors detect the grounding of all foot bottom supporting portions, wherein a virtual supporting polygon having an area equivalent to a flat grounding surface is formed on the foot bottoms, and the foot bottoms can be supported at polygonal points (multiple points). Accordingly, it is possible to securely support the leg portions of the walking robot and to prevent it from falling over.
(2) Since the respective foot bottom supporting portions are passively grounded on the grounding surface, following the contours of the ground conditions, the base portion of the foot bottom can be made roughly horizontal when being grounded, wherein it is possible to control the position and posture of the main body and waist of the walking robot as per setting in line therewith, and stable walking can be carried out.
(3) Since the grounding of the respective foot bottom supporting portions can be individually detected by the grounding sensor disposed at the base portion or the respective foot bottom supporting portions, it is possible to securely confirm the grounding of all foot bottom supporting portions, wherein it is possible to control and brake the movements of all foot bottom supporting portions by means of the lock mechanism.
(4) Since the foot bottom supporting portions are slidably or rotatably supported on the base portion, the end part of the foot bottom supporting portions can easily and securely cause the respective foot bottom supporting portions to slide or turn upward of the foot bottom, without depending on the contours of the grounding surface, when the end part of the foot bottom supporting portion is grounded on the grounding surface such as a road surface. Therefore, the foot bottom is not caught by any convex part on the grounding surface, wherein it is possible to control and brake the movements of all foot bottom supporting portions by means of the lock mechanism, and it is possible to form a virtual supporting polygon having an area equivalent to a flat grounding surface on the foot bottom and to support the foot bottom supporting portions at polygonal points.
(5) Since the foot bottom supporting portion is disposed at the base portion, it is possible to integrally handle the foot portion supporting portions, wherein the foot bottom supporting portion can be easily attached to the foot bottom of a leg portion of the existing walking robot, and it is possible to improve the stability in walking motions of the walking robot.
(6) Since three or more foot bottom supporting portions are provided, it is possible to securely form a supporting polygon of an area equivalent to a flat grounding surface on the foot bottom and to support the leg portion at polygonal points, wherein the leg portion of the walking robot can be stably supported, and the multiple-point grounding type foot portion supporting mechanism can be preferably employed particularly for biped walking robots.

Herein, the outer shape of the base portion is formed to be polygonal such as roughly rectangular, roughly hexagonal, roughly octagonal, or roughly circular, or roughly elliptical, etc. , so as to secure a sufficient supporting area in compliance with the size of a foot bottom of the leg portion of a walking robot. An aluminum alloy may be preferably employed as the material of the base portion because the material is light in weight and has high strength and rigidity.
A 6-axis force sensor that detects a reaction force from the grounding surface such as a floor, or a road surface, and measures the position of the ZMP (Zero Moment Point) is disposed at the base portion and is attached to the foot bottom of a leg portion of a walking robot.
The foot bottom supporting portion is formed to be polygonal column such as a triangular column, a quadrangular prism, or a hexagonal column in addition to a roughly circular column and an roughly elliptical column, and is slidably supported or has its end part axially supported rotatably by bending the same to be roughly L-shaped, wherein when the foot bottom supporting portion protruding downward from the bottom face of the base portion is grounded on the grounding surface such as a road surface, it is possible to move one end part of the foot bottom supporting portions upward so that the protrusion amount from the foot bottom can be reduced, and the foot bottom supporting portions can follow the contours of the grounding surface.
Since the supporting polygon formed by the foot bottom supporting portions is made into an equilateral polygon such as an equilateral triangle and a regular square where the end parts of the foot bottom supporting portions are disposed at an equal interval therebetween on the same circumference so as to become equidistant from the center of the base portion, it is possible to uniformly support the leg portion by the respective foot bottom supporting portions, wherein it is possible to improve the stability when being grounded.

A sensor that is disposed at the base portion or the foot bottom supporting portion and detects sliding or turning of the foot bottom supporting portion or a sensor that is disposed at the end part at the grounding side of the foot bottom supporting portion and detects grounding of the foot bottom supporting portion and the grounding surface may be used as the grounding sensor.
A grounding projection made of synthetic rubber, etc., and formed to be roughly circular column or roughly semi-spherical may be disposed at the lower end of the foot bottom supporting portion, wherein it is possible to protect the lower end of the foot bottom supporting portion. In particular, where the grounding sensor is disposed at the lower end of the foot bottom supporting portion, it is possible to protect the grounding sensor by covering the outer circumferential part other than the grounding portion of the grounding sensor with the foot bottom supporting portion and a grounding projection. Therefore, it is possible to prevent the grounding sensor from being damaged, wherein reliability is excellent.
Also, where a sliding cover formed to have a roughly cylindrical bottom plate so that it covers the entirety of the lower part of the foot bottom supporting portion including the grounding sensor is slidably attached to the foot bottom supporting portion, the sliding cover can be slid upward regardless of the grounding angle of the foot portion when being grounded, wherein it is possible to detect the contacting of the foot bottom supporting portion with the grounding surface by means of the grounding sensor in reaction to sliding of the sliding cover. Accordingly, it is possible to prevent the grounding sensor from becoming defective due to the grounding angle of the foot portion, wherein it is possible to improve the reliability.

As the lock mechanism, a lock mechanism may be preferably employed, which carries out mechanical locking or locking based on a friction force by driving an actuator in compliance with a signal from the grounding sensor when all foot bottom supporting portions are grounded, causing the brake portion to slide or turn by the actuator, and bringing the brake portion into contact with a contacting portion formed or disposed at the upper end of the foot bottom supporting portion and the side face thereof. When canceling the braking of the foot bottom supporting portion, the cancellation may be carried out at the same time when all foot bottom supporting portions are separated from the grounding surface, or the foot bottom supporting portions may be individually released from braking whenever the respective foot bottom supporting portions are separated from the grounding surface.
Further, where a pressing member such as a spring for always pressing the foot bottom supporting portion to the bottom face side of the base portion is equipped, it is possible to cause the foot bottom supporting portion to automatically protrude from the bottom face of the base portion by a restoration force of the pressing member at the same time when the lock mechanism is canceled, and the foot bottom supporting portion can be reset to its default state.
The multiple-point grounding type foot portion supporting mechanism can be easily attached to the foot portion of an existing walking robot. Since the supporting mechanism is provided with three or more foot bottom supporting portions, a supporting polygon is securely formed on the respective foot bottoms, and the foot portion can be supported at multiple points. Therefore, the multiple-point grounding type foot portion supporting mechanism is effective particularly for a biped walking robot walking in a remarkably uneven place where a wheel-moving type robot cannot enter and a place where a wide supporting base bottom face necessary for a multi-legged robot cannot be secured. However, the multiple-point grounding type foot portion supporting mechanism can also be attached to other legged walking robots such as a four-legged robot or a six-legged robot.

The invention of Clam 2 is featured, in addition to the multiple-point grounding type foot portion supporting mechanism according to Claim 1, in that the foot bottom supporting portion includes: a vertical supporting portion grounded at the lower end part; a horizontal supporting portion extending from the upper end part of the vertical supporting portion roughly in the horizontal direction; and an axial supporting portion formed at the end part of the horizontal supporting portion; wherein the base portion includes a turning and supporting portion for axially rotatably supporting the axial supporting portion of the respective foot bottom supporting portion.
With the construction, the following actions can be brought about in addition to those of Claim 1.
(1) Since the foot bottom supporting portion is provided with the vertical supporting portion grounded at its lower end part and the horizontal supporting portion extending from the upper end part of the vertical supporting portion roughly in the horizontal direction, and is axially rotatably supported at the turning and supporting portion formed at the base portion at the axial supporting portion formed at the end part of the horizontal supporting portion, the respective foot bottom supporting portions turn with the axial supporting portion used as a fulcrum when the lower end part of the vertical supporting portion of the foot bottom supporting portion is grounded, and the foot bottom supporting portion can move in the direction, along which the protrusion amount thereof from the foot bottom is reduced, (that is, upward), passively following the contours of the grounding surface, wherein a virtual supporting polygon is formed, and the foot portion can be supported at multiple points.

Herein, a twisted coil spring is disposed at the axial supporting portion of the foot bottom supporting portion as the pressing member, and the lower end of the vertical supporting portion may always be pressed (downward) in the direction along which the lower end thereof is always protruding downward from the bottom face of the base portion. Accordingly, the foot bottom supporting portion may be turned and moved so that the vertical supporting portion of the foot bottom supporting portion is automatically protruding from the bottom face of the base port ion by a restoration force of the pressing member at the same time when the lock mechanism is canceled, wherein it is possible to reset the foot bottom supporting portion to its default state.
Also, where the horizontal supporting portions of the respective foot bottom supporting portions are radially disposed from the center of the base portion, the leg portion can be uniformly supported by the respective foot bottom supporting portions, wherein the stability in grounding is excellent. In particular, where the foot bottom supporting portions are equiangularly disposed, the supporting polygon formed by the foot bottom supporting portions becomes a regular polygon such as an equilateral triangle and a regular square, wherein the grounding stability can be improved.

The invention of Claim 3 is featured, in addition to the multiple-point grounding type foot portion supporting mechanism according to Claim 2, in that the grounding sensor is disposed at the lower end part of the vertical supporting portion of the foot bottom supporting portion.
With the construction, the following actions can be brought about in addition to those of Claim 2.
(1) Since the grounding sensor is disposed at the lower end part of the vertical supporting portion of the foot bottom supporting portion, it is possible to directly detect whether or not the lower end part of the vertical supporting portion of the foot bottom supporting portion is grounded when the lower end part thereof is grounded on the grounding surface such as a road surface. Accordingly, the presence or absence of the grounding can be further securely recognized, wherein it is possible to prevent the lockmechanism from erroneous operation, and the leg portion can be supported in a stable state.

Here, when a grounding portion of the grounding sensor is grounded on the grounding surface such as a road surface, the grounding sensor detects that the foot bottom supporting portion has been grounded. A pushbutton type and a hinge lever type are available as the grounding portion of the grounding sensor, the former of which carries out switching by a pin protruding from the sensor surface being directly brought into contact with the grounding surface, and the latter of which carries out switching by one end of a plate spring having the other end rotatably supported on the sensor surface being brought into contact with the grounding surface, being swayed and being brought into contact with a contact point of the sensor surface. In the case of the hinge lever type, it is preferable that a projection portion is formed or disposed at the grounding surface side at the end part of the side which is brought into contact with the grounding surface. Accordingly, the end part of the plate spring can be further securely brought into contact with the grounding surface to cause the plate spring to sway, wherein stability in the switching motion is excellent. In particular, in a case of a roller in which the protrusion portion is rotatably disposed, the roller can slidingly move on the grounding surface in line with turning of the foot bottom supporting portion, wherein there is no case where any excessive load is applied to the plate spring, and stability in the switching motion can be improved. Further, the grounding portion of the grounding sensor is arranged at the base portion side (heel side) of the vertical supporting portion, which is first grounded in walking. Thereby, the grounding portion of the grounding sensor can be securely brought into contact with the grounding surface to enable switching, wherein the operation stability of the grounding sensor is excellent.

The invention of Claim 4 is featured, in addition to the multiple-point grounding type foot portion supporting mechanism according to Claim 2, in that the grounding sensor is disposed at the lower part of the horizontal supporting portion of the foot bottom supporting portion, and is simultaneously provided with a sensor-contacting portion fixed at the base portion and disposed downward of the grounding sensor.
With the construction, the following actions can be brought about in addition to those of Claim 2.
(1) Since the grounding sensor is disposed at the horizontal supporting portion of the foot bottom supporting portion, and detects turning of the foot bottom supporting portion due to grounding of the lower end part of the foot bottom supporting portion based on whether or not the grounding sensor is brought into contact with the sensor-contacting portion of the sensor, the grounding sensor can securely operate regardless of conditions of the grounding surface and existence of any obstacle such as gravel, and reliability of the operation and stability thereof can be improved.

The invention of Claim 5 is featured, in addition to the multiple-point grounding type foot portion supporting mechanism according to any one of Claim 2 through Claim 4, in that the respective foot bottom supporting portions have a roughly arc-shaped contacting portion formed at the end part of the horizontal supporting portion, and the lock mechanism includes (a) a brake portion in which a tapered part brought into contact with the contacting portion of the respective foot bottom supporting portions and widened upward is formed at the lower end thereof, and (b) an actuator linked with the brake portion for causing the brake portion to slide in the up and down directions.
With the construction, the following actions can be brought about in addition to those of any one of Claim 2 through the Claim 4.
(1) Since a roughly arc-shaped contacting portion is formed at the end part of the horizontal supporting portion of the foot bottom supporting portion, and the lock mechanism is provided with a brake portion having a tapered part formed at the lower end thereof and an actuator linked with the brake portion, the brake portion is caused to slide in the vertical direction by the actuator of the lock mechanism when the foot bottom supporting portion is grounded, and the tapered part of the brake portion can be brought into contact with the contacting portion of the foot bottom supporting portion,
   wherein it is possible to securely prevent the foot bottom supporting portion from turning, and the leg portion is stable and supported by polygonal-point supporting by means of the foot bottom supporting portion.
(2) Since the contacting portion of the horizontal supporting portion of the foot bottom supporting portion is formed to be roughly arc-shaped, and the tapered part of the brake portion of the lock mechanism is formed so as to be widened upward, it is possible to securely bring the tapered part of the brake portion into contact with the contacting portion of the horizontal supporting portion of the foot bottom supporting portion without depending on the turning amount of the foot bottom supporting portion, wherein the foot bottom supporting portion can be prevented from turning and can be retained.
(3) Since the actuator is disposed so as to cause the brake portion to slide in the vertical direction, the installation space of the lock mechanism can be narrowed, wherein the space saving feature is excellent, and the foot bottom supporting mechanism can be downsized and lightened in weight.

Herein, the actuator may be of such a type as a cylinder being actuated by gas pressure or a hydraulic force, etc., or as an electromagnetic solenoid, etc., being employed. The solenoid is downsized and light in weight, which can contribute to space savings. In particular, a bistable self-retaining type solenoid capable of actuating the brake portion in both the upper and lower directions may employ an absorption force of the solenoid in both braking (when descending) by the brake portion and releasing the brake (ascending), wherein since vertical motions of the brake portion can be quickly carried out, the solenoid is preferably employed. Also, since the bistable self-retaining type solenoid internally incorporates a magnet, a force is applied in the locking direction due to a reaction force of the magnet without supplying electricity, wherein further secure locking is enabled. Therefore, the bistable self-retaining type solenoid has high reliability and is excellent in energy savings because it is sufficient that electricity is supplied only in braking and releasing thereof.

The invention of Claim 6 is featured, in addition to the multiple-point grounding type foot portion supporting mechanism according to Claim 5, in further including: an upper part fixing portion of a resilient body, which is disposed in the brake portion; a lower part fixing portion thereof which is disposed on the base portion; and a resilient body the upper end part of which is fixed at the upper part fixing portion thereof, and the lower end part of which is fixed at the lower part fixing portion thereof.
With the construction, the following actions can be brought about in addition to those of Claim 5.
(1) The brake portion can be caused to quickly slide downward in a braking motion by a restoration force of the resilient body extended by upward sliding of the brake portion in a releasing motion of the brake portion, wherein the brakingmotion can be quickly carried out, and the response speed can be improved.
(2) By adjusting the brake portion so that the restoration force of the resilient body can operate in a state where a braking motion is executed (that is, even in a state where the tapered part of the brake portion is brought into contact with the contacting portion of the foot bottom supporting portion), the tapered part of the brake portion can always be pressed by the restoration force of the contacting portion when a releasing motion is carried out, wherein it is possible to firmly lock the foot bottom supporting portion.

Here, a tension spring and a tension coil spring, etc., may be employed as the resilient body.
In addition, in order to attempt to cause the restoration force of the resilient body to work in a braking motion, the length of the resilient body and the distance between the respective fixing parts are adjusted so that the extended resilient body is fixed between the respective fixing parts in a state where the brake portion, which is in a braking motion, is slid downward.

A biped walking robot, equipped with the multiple-point grounding type foot portion supporting mechanism, according to Claim 7 of the invention is featured in including: left and right foot portions; and a multiple-point grounding type foot portion supporting mechanism, according to any one of Claim 1 through Claim 6, each of which' is disposed on the foot bottom of the left and right foot portions.
With the construction, the following actions can be brought about.
(1) Since the multiple-point grounding.type foot portion supporting mechanism is disposed on the foot bottom of the left and right foot portions, respectively, a virtual supporting polygon having an area equivalent to a flat grounding surface is formed on the foot bottom even on a complicated grounding surface, which has unevenness or differences, by the multiple-point grounding type foot portion supporting mechanism of the foot portion, grounded in walking, of the left and right foot portions, wherein the foot portion can be supported at polygonal points, and the leg portions of the biped walking robot can be,securely supported. Therefore, it is possible to continue stable walking while preventing the walking robot from falling over.
(2) Where ZMP control of a biped walking robot is carried out, since a walking pattern is usually set so that the ZMP exists in a supporting polygon where it is assumed that the grounding surface is a horizontal flat plane, the supporting polygon recognized by the walking robot greatly differs from the actual supporting polygon where, with a prior art rigid flat foot bottom, the robot steps on an inclination surface of the grounding surface or an uneven place thereof, wherein the walking becomes unstable, and finally the robot falls over. However, since the respective foot bottom supporting portions can be grounded, passively following the grounding surface, the supporting polygon recognized by the biped walking robot can always be made roughly coincident with an actual supporting polygon even if the grounding surface is uneven, wherein the biped walking robot can stably walk as per set walking pattern.

Herein, the biped walking robot includes a serial link mechanism portion or a parallel link mechanism portion at its leg portions. The parallel link mechanism portion is disposed between a passive joint disposed at the base portion and the passive joint disposed at the left and right foot portions, respectively. Where the leg portion is composed of a Stewart platform in which the respective parallel link mechanism portions are disposed to be V-shaped with two links made into one set, and three sets thereof are provided, excellent stability and rigidity are secured, and simultaneously it becomes possible to simplify motion control.
Various types of links are available, which are a link having a feed-screw mechanism using a motor, a direct-acting link using an oil pressure, hydraulic pressure, and pneumatic pressure cylinder, and a direct-acting type actuator, etc., and a link in which two or more rod-shaped members are linked together by driving joints. Also, where the direct-acting link is used, since the respective direct-acting links are caused to extend and contract in the axial directions and do not interfere with each other, the system is preferably employed because it can be downsized.

As the passive joint, a universal joint, a ball joint, or two-axis axial joint, or a combination thereof with one-axis or two-axis axial joint may be adequately disposed and used at the base side and at the left and right foot portions. Where the universal joint is used, it is preferable because the movable range is widened in comparison with the ball joint.
The respective parallel link mechanism portions used at the left and right leg portions are symmetrically disposed at both sides at the middle of the base portion, and where links used in the parallel link mechanism portions are symmetrically disposed at the left and right leg portions as well, the ZMP control to carry out walking motion control is enabled, wherein stability in walking motions is excellent.

A control structure for a biped walking robot according to Claim 8 of the invention is a control structure for a biped walking robot walking by vertically moving the left foot portion and the right foot portion up and down, having: left and right foot portions; multiple-point grounding type leg portion supporting mechanisms each disposed at the left foot portion and the right foot portion; and including: three or more foot bottom supporting portions in which the multiple-point grounding type foot portion supporting mechanisms have one end thereof protruding from and disposed on the foot bottom, and the protrusion amounts thereof are independently and passively reduced when being grounded; grounding sensors for detecting the grounding of the respective foot bottom supporting portions; and lock mechanisms for braking movements of the respective foot bottom supporting portions; wherein when the grounding sensors detect, with respect to the left and right foot portions, that all foot bottom supporting portions of the multiple-point grounding type foot portion supporting mechanism are grounded on the grounding surface such as a road surface, movements of all foot bottom supporting portions are braked by the lock mechanisms, the foot bottoms of the grounded foot portions are supported at polygonal points, and simultaneously, when the grounding sensors detect that all foot bottom supporting portions of the multiple-point grounding type foot portion supporting mechanism are separated from the grounding surface such as a road surface, the lock mechanisms are released to unlock the braking of all foot bottom supporting portions.
With the construction, the following actions can be brought about.
(1) When, with respect to the left and right foot portions, the grounding sensors detect that all foot bottom supporting portions of the multiple-point grounding type foot portion supporting mechanism are grounded on the grounding surface such as a road surface, the lock mechanism brakes movements of all foot bottom supporting portions, a virtual supporting polygon is formed on the foot bottom of the grounded foot portion, and the foot portion is supported at polygonal points. Therefore, even in a state where only either of the left foot portion or the right foot portion is grounded when the biped walking robot walks, it is possible to securely support the biped walking robot by the grounded foot portion, and the ZMP control is carried out to enable stable walking.
(2) When, with respect to the left and right foot portions, the grounding sensors detect that all foot bottom supporting portions of the multiple-point grounding type foot portion supporting mechanism are grounded on the grounding surface such as a road surface, the lock mechanism brakes movements of all foot bottom supporting portions, and when the grounding sensors detect that all foot bottom supporting portions of the multiple-point grounding type foot portion supporting mechanism are separated from the grounding surface such as a road surface, the lock mechanism is released to unlock the braking of all foot bottom supporting portions. Accordingly, the center of gravity is shifted to a securely grounded foot portion at the timing when a supporting polygon is formed on the foot bottom of the grounded foot portion, wherein the robot is supported at polygonal points, stability in walking can be improved, and it is possible to prevent the biped walking robot from falling over.

### Effects of the Invention

As described above, according to the multiple-point grounding type foot portion supporting mechanism, a biped walking robot equipped with the same, and a control structure therefor according to the present invention, the following advantageous effects can be brought about.
According to Claim 1, the following effects can be brought.
(1) Since the robot is provided with three or more foot bottom supporting portions, with one end thereof disposed so as to protrude downward from the bottom face of the base portion disposed at the foot portion, which independently move upward and are slidably or rotatably supported, the respective foot bottom supporting portions move in the direction, along which the protrusion amount from the foot bottom is reduced, passively following the contours of the respective grounding surface. Therefore, when the grounding sensors detect grounding of all foot bottom supporting portions, movements of all foot bottom supporting portions are braked by the lock mechanism, wherein a virtual supporting polygon of an area equivalent to a flat grounding portion is formed on the foot bottom, polygonal-point supporting is enabled, and it is possible to provide a multiple-point grounding type foot portion supporting mechanism having high reliability, which securely supports the leg portions and can prevent the robot from falling over.
(2) Since the respective foot bottom supporting portions are grounded, passively following the contours of the grounding surface, the base portion of the foot bottom can always be made roughly horizontal when being grounded. In line therewith, it is possible to control the position and posture of the main body portion and the waist of a walking robot as designed, wherein it is possible to provide a multiple-point grounding type foot portion supporting mechanism having excellent walking stability.
(3) Since grounding of the respective foot bottom supporting portions is individually detected by the grounding sensors disposed at the base portion or at the respective foot bottom supporting portions, the grounding of all foot bottom supporting portions can be reliably confirmed, wherein it is possible to provide a multiple-point grounding type foot portion supporting mechanism having high reliability, which can brake movements of all foot bottom supporting portions by the lock mechanism.
(4) Since the foot bottom supporting portions can be slidably or rotatably supported at the base portion, it is possible to securely cause the respective foot bottom supporting portions to easily and securely slide or turn upward of the foot bottom regardless of the contours of the grounding surface when one-end portion of the foot bottom supporting portion is grounded on the grounding surface such as a road surface, wherein the foot bottom is not caught by any convex part of the grounding surface, and movements of all foot bottom supporting portions can be braked by the lock mechanism. Therefore, it is possible to provide a multiple-point grounding type foot portion supporting mechanism having high reliability, for which polygonal point supporting is enabled by forming a virtual supporting polygon of an area equivalent to a flat grounding surface on the foot bottom.
(5) Since the foot bottom supporting portion is disposed at the base portion, the foot portion supporting mechanism can be integrally handled, and the foot portion supportingmechanism can be easily attached to the foot bottom of the leg portion of the existing walking robot, wherein it is possible to provide a multiple-point grounding type foot portion supporting mechanism having excellent assembling performance and excellent productivity, by which stability in walking motions of a walking robot can be improved.
(6) Since a supporting polygon of an area equivalent to a flat grounding surface is securely formed on the foot bottom and polygonal-point supporting is enabled by having three or more foot bottom supporting portions, it is possible to provide a multiple-point grounding type foot portion supporting mechanism having excellent practicability and excellent reliability, which supports the leg portions of the walking robot in a stable state, and particularly can be preferably used for a biped walking robot.

According to Claim 2, the following effects can be brought about in addition to those of Claim 1.
(1) Since the foot bottom supporting portion has a vertical supporting portion grounded at the lower end part thereof and a horizontal supporting portion extending in a roughly horizontal direction from the upper end part of the vertical supporting portion, and is axially supported rotatably by the turning and supporting portion formed at the base portion at the axially supporting portion formed at the other end part of the horizontal supporting portion, it is possible to provide a multiple-point grounding type foot portion supporting mechanism having excellent stability in walking motions, in which the respective foot bottom supporting portions turn with the axially supporting portions used as fulcrums when the lower end part of the vertical supporting portion of the foot bottom supporting portion is grounded, the foot bottom supporting portion can move in a direction along which the protrusion amount from the foot bottom is reduced (that is, upward), passively following the contours of the grounding surface, and a virtual supporting polygon is formed to enable polygonal-point supporting.

According to Claim 3, the following effects can be brought about in addition to those of Claim 2.
(1) Since, by disposing the grounding sensor at the lower end part of the vertical supporting portion of the foot bottom supporting portion, it is possible to directly detect whether or not the lower end part of the vertical supporting portion of the foot bottom supporting portion is grounded when the lower end part thereof is grounded on the grounding surface such as a road surface, it is possible to provide a multiple-point grounding type foot portion supporting mechanism having excellent reliability and certainty, which can further securely recognize the grounding, can prevent the lock mechanism from erroneous operation, and can support the leg portions in a stable manner.

According to Claim 4, the following effects can be brought about in addition to those of Claim 2.
(1) Since turning of the foot bottom supporting portion, which is based on grounding of the lower end part of the foot bottom supporting portion, can be detected by the grounding sensor, it is possible to provide a multiple-point grounding type foot portion supporting mechanism having excellent reliability and stability in operation, in which the grounding sensor securely operates regardless of the form of the grounding surface and existence of obstacles such as gravel.

According to the Claim 5, the following effects can be brought about in addition to those of Claim 2 through Claim 4.
(1) Since a roughly arc-shaped contacting portion is formed at the other end part of the horizontal supporting portion of the foot bottom supporting portion, and the lock mechanism is provided with a brake portion having a tapered part at one end thereof and an actuator linked with the other end of the brake portion, it is possible to provide a multiple-point grounding type foot portion supporting mechanism having excellent reliability and certainty, which is capable of causing the brake portion to slide in the up and down direction by the actuator of the lock mechanism when the foot bottom supporting portion is grounded, bringing the tapered part of the brake portion into contact with the contacting portion of the foot bottom supporting portion, reliably braking movements of the foot bottom supporting portion, and supporting the leg portions in a stable state.
(2) Since the contacting portion of the horizontal supporting portion of the foot bottom supporting portion is formed to be roughly arc-shaped, and the tapered part of the brake portion of the lockmechanism is widened upward, it is possible to provide a multiple-point grounding type foot portion supporting mechanism having excellent stability in motions, which is capable of securely bringing the tapered part of the brake portion into contact with the contacting portion of the horizontal supporting portion of the foot bottom supporting portion, and capable of braking the foot bottom supporting portion while preventing the foot bottom supporting portion from turning.
(3) Since the brake portion of the actuator is disposed so as to slide in the up and down directions, it is possible to provide a multiple-point grounding type foot portion supporting mechanism in which the installation space of the lock mechanism can be narrowed, downsized, and has excellent space efficiency.

According to Claim 6, the following effects can be brought about in addition to Claim 5.
(1) It is possible to provide a multiple-point grounding type foot portion supporting mechanism having an excellent response speed, which is capable of causing the brake portion to quickly slide downward in a braking motion by a restoration force of a resilient body extended in a brake-unlocking motion, and capable of carrying out a quick braking motion.
(2) It is possible to provide a multiple-point grounding type foot portion supporting mechanism having excellent reliability and certainty, which is capable of always pressing the brake portion to the contacting portion of the foot bottom supporting portion in a braking motion by adjusting the restoration force of the resilient body so as to work in a braking motion, and is capable of firmly locking the foot bottom supporting portion.

According to Claim 7, the following effects can be brought about.
(1) Since the multiple-point grounding type foot portion supporting mechanism is disposed on the foot bottom of the left and right foot portions, respectively, it is possible to provide a biped walking robot equipped with the multiple-point grounding type foot portion supporting mechanism having excellent stability, which is capable of forming a virtual supporting polygon having an area equivalent to a flat grounding surface on the foot bottom even on a complicated grounding surface, which has unevenness or level differences, etc., by the multiple-point grounding type foot portion supporting mechanism of the foot portion, grounded in walking, of the left and right foot portions, is capable of securely supporting the leg portions, and is capable of preventing the walking robot from falling over.
(2) Since, where the ZMP control of a biped walking robot is carried out, the respective foot bottom supporting portions are grounded, passively following the grounding surface, and a supporting polygon recognized by the biped walking robot is roughly made coincident with the actual supporting polygon even if the grounding surface is uneven, it is possible to provide a biped walking robot which is capable of carrying out stable walking as per established walking pattern.

According to Claim 8, the following effects can be brought about.
(1) When, with respect to the left and right foot portions, the grounding sensors detect that all foot bottom supporting portions of the multiple-point grounding type foot portion supporting mechanism are grounded on the grounding surface such as a road surface, since the lock mechanism brakes movements of all foot bottom supporting portions, and the foot bottom of the grounded foot portion is supported at polygonal points, it is possible to provide a control structure for a biped walking robot having excellent reliability, which is capable of securely supporting the biped walking robot by the grounded foot portion even in a state where only either of the left foot portion or the right foot portion is grounded when the biped walking robot walks, and is capable of carrying out stable walking by executing the ZMP control.
(2) When, with respect to the left and right foot portions, the grounding sensors detect that all foot bottom supporting portions of the multiple-point grounding type foot portion supporting mechanism are grounded on the grounding surface such as a road surface, since the lock mechanism brakes movements of all foot bottom supporting portions, and when the grounding sensors detect that all foot bottom supporting portions of the multiple-point grounding type foot portion supporting mechanism are separated from the grounding surface such as a road surface, the lock mechanism is released to unlock the braking of all foot bottom supporting portions, it is possible to provide a control structure for a biped walking robot having excellent stability in walking motions, which is capable of forming a virtual supporting polygon at the foot bottom of the grounded foot portion, and is capable of shifting the center of gravity to a securely grounded foot portion at the timing when supporting polygon points are formed on the foot bottom of the grounded foot portion.

### Brief Description of the Drawings

FIG. 1 is a perspective view depicting a multiple-point grounding type foot portion supporting mechanism according to a first embodiment of the present invention;
FIG. 2A is a sectional side view of the major parts, depicting the foot bottom supporting portion and the lock mechanism, and FIG. 2B is a sectional side view of the major parts, depicting a braking state of the foot bottom supporting portion;
FIG. 3 is a perspective view depicting a biped walking robot equipped with the multiple-point grounding type foot portion supporting mechanism according to the first embodiment of the present invention;
FIG. 4 is a perspective view of the major parts, depicting the passive joint of the base portion;
FIG. 5 is a perspective view of the major parts, depicting the passive joint of the foot portion;
FIG. 6 is an enlarged side view of the foot portion, depicting a walking state of a biped walking robot equipped with the multiple-point grounding type foot portion supporting mechanism;
FIG. 7 is a perspective view of the major parts, depicting a foot portion supporting portion and a lock mechanism of the multiple-point grounding type foot portion supporting mechanism according to the second embodiment; and
FIG. 8A is a sectional side view of the major parts, depicting the foot bottom supporting portion and the lock mechanism, and FIG. 8B is a sectional side view of the major parts depicting a fixed state of the foot bottom supporting portion.

### Description of the Symbols

- 1: Multiple-point grounding type foot portion supporting mechanism according to the first embodiment of the present invention
- 2: Base portion
- 2a: Force sensor accommodating portion
- 2b: Positioning hole
- 2c: Bolt insertion hole
- 2d: Bottom face
- 2e: Turning and supporting portion
- 2f: Rib
- 3: Foot bottom supporting portion
- 3a: Vertical supporting portion
- 3b: Horizontal supporting portion
- 3c: Lower end part
- 3d: Axial supporting portion
- 3e: Contacting portion
- 4: Grounding sensor
- 4a: Sensor fixing hole
- 4b: Sensor surface
- 4c: Contact point
- 4d: Grounding portion
- 4e: Roller
- 4f: Connection terminal
- 5: Lock mechanism
- 5a: Actuator
- 5b: Sliding portion
- 6: Brake portion
- 6a: Tapered part
- 6b: Rear side portion
- 7: Connection shaft
- 8: Brake contacting portion
- 8a: Friction material
- 10: Biped walking robot
- 11: Base portion
- 12a,12b: Foot portions
- 13: Parallel link mechanism portion
- 13a,13b: Direct-acting links
- 14: Base portion passive joint
- 15: Foot portion passive joint
- 16a: Base portion upper joint
- 16b: Upper part joint axis
- 16c: Base portion lower joint
- 16d: Lower part joint axis
- 16e: Linkage turning portion
- 17a: First foot portion upper joint
- 17b: Second foot portion upper joint
- 17c: Upper part joint axis
- 17d: Foot portion lower joint
- 17e: Lower part joint axis
- 17f: Linkage turning portion
- 18: Base portion
- 18a: Base portion axis
- 20: Grounding surface
- 20a: Inclination surface
- 22: Holding portion
- 22a: Resilient body lower part fixing portion
- 23: Foot bottom supporting portion
- 23a: Vertical supporting portion
- 23b: Horizontal supporting portion
- 23c: Lower end part
- 23d: Axial supporting portion
- 23e: Contacting portion
- 24: Grounding sensor
- 24a: Movable portion
- 24b: Lower end surface
- 25: Lock mechanism
- 25a: Actuator
- 25b: Sliding portion
- 26: Brake portion
- 26a: Resilient body upper part fixing portion
- 26b: Tapered part
- 26c: Rear side portion
- 27: Resilient body
- 28: Brake contacting portion
- 28a: Friction material
- 29: Bottom wall portion
- 29a: Sensor contacting portion

### Best Mode for Carrying Out the Invention

### [First Embodiment]

A description is given below of a multiple-point grounding type foot portion supporting mechanism according to the first embodiment of the present invention with reference to the accompanying drawings.

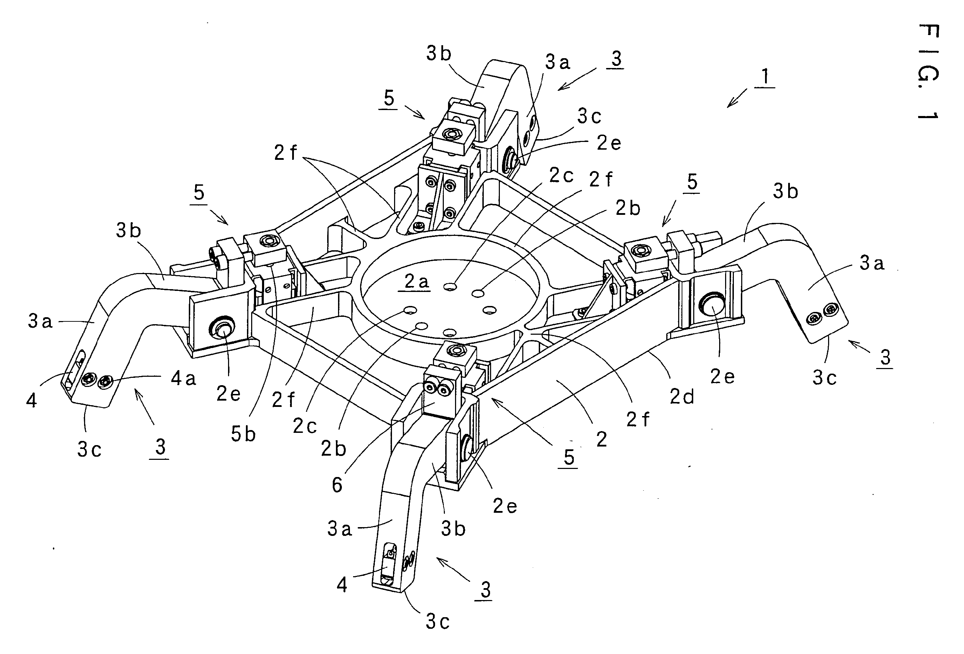

FIG. 1 is a perspective view depicting a multiple-point grounding type foot portion supporting mechanism according to the first embodiment of the present invention.
In FIG. 1, reference numeral 1 denotes a multiple-point grounding type foot portion supporting mechanism according to the first embodiment of the present invention. Reference numeral 2 denotes a base portion of the multiple-point grounding type foot portion supporting mechanism 1, which is made of aluminum alloy, etc., and the outer shape of which is polygonal formed to be roughly rectangular or is circular, 2a denotes a force sensor accommodating portion of the base portion 2, which accommodates a 6-axis force sensor (not shown) roughly having a bottom and formed to be cylindrical, for detecting a reaction force from a grounding surface such as a floor, a road surface, and measuring the position of ZMP, 2b denotes a positioning hole drilled in the bottom face of the force sensor accommodating portion 2a and located at two points, into which a positioning pin to position a 6-axis force sensor is inserted, 2c denotes a bolt insertion hole drilled in the bottom face of the force sensor accommodating portion 2a and located at four points, into which a fixing bolt to fix the 6-axis force sensor by screws is inserted, 2d denotes a bottom face of the base portion 2, 2e denotes a turning and supporting portion disposed at four corners of the base portion 2, and 2f denotes a rib erected on the bottom face 2d for reinforcing the bottom face 2d and accommodating the respective parts. Reference numeral 3 denotes four foot bottom supporting portions, each of which has a vertical supporting portion 3a and a horizontal supporting portion 3b bent from the upper end part of the vertical supporting portion 3a and extending in a roughly horizontal direction, and is formed to be roughly L-shaped, and in which the lower end part 3c of the vertical supporting portion 3a is disposed so as to protrude downward from the bottom face 2d of the base portion 2, and the end part of the horizontal supporting portion 3b is rotatably axially supported by the turning and supporting portion 2e. Reference numeral 4 denotes a grounding sensor disposed or accommodated in the lower end parts 3c of the vertical supporting portions 3a of the four foot bottom supporting portions 3, respectively, which detects that the lower end part 3c of the foot bottom supporting portion 3 is grounded. Reference numeral 5 denotes a lock mechanism disposed at four corners of the base portion 2 for braking movements of all foot bottom supporting portions 3 when grounding of foot bottom supporting portions 3 is detected by the four grounding sensors 4.

The force sensor accommodating portion 2a in which the 6-axis force sensor is accommodated is provided at the base portion 2, two positioning holes 2b into which positioning pins to position the 6-axis force sensor are inserted, and four bolt insertion holes 2c into which fixing bolts to fix the 6-axis force sensor by screws are inserted are drilled in the bottom face of the force sensor accommodating portion 2a. Therefore, it is possible to easily position and fix the 6-axis force sensor in the force sensor accommodating portion 2a. Accordingly, the multiple-point grounding type foot portion supporting mechanism 1 can be attached to the foot portions of the existing biped walking robot, etc., by means of the 6-axis force sensor, wherein the ZMP position can be measured by detecting the reaction force from the grounding surface such as a floor and a road surface.
It is possible to attach the multiple-point grounding type foot portion supporting mechanism 1 to the foot portions of various types of biped walking robots, etc. , only by changing the shapes of the base portion 2 and the force sensor accommodating portion 2a. That is, excellent versatility is secured.

Next, a detailed description is given of the foot bottom supporting portion and the lock mechanism.

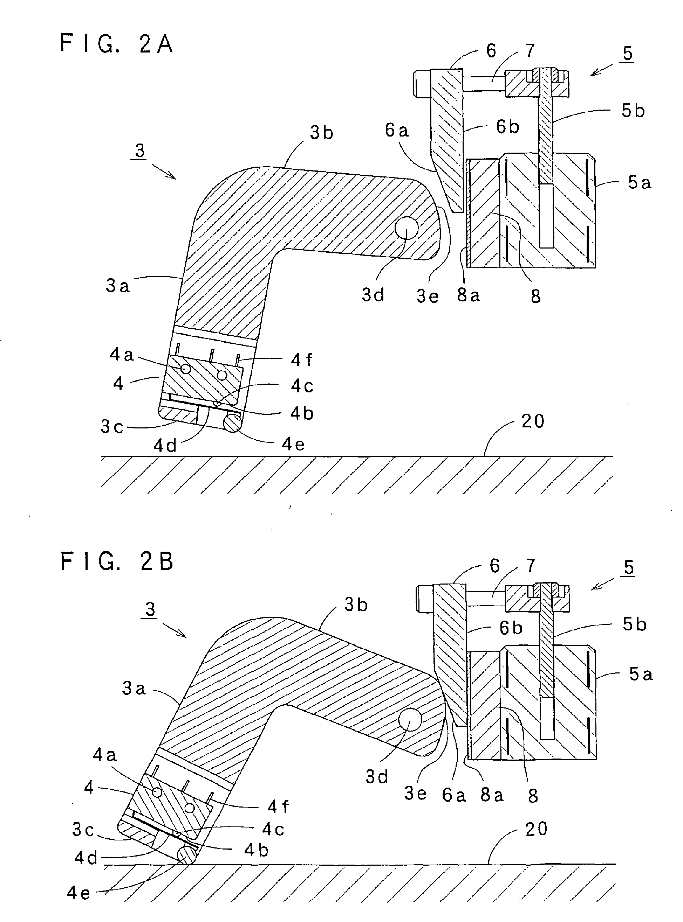

FIG. 2A is a sectional side view of the major parts, depicting the foot bottom supporting portion and the lock mechanism, and FIG. 2B is a sectional side view of the major parts, depicting a fixing state of the foot bottom supporting portion.
In FIG. 2, reference numeral 3d denotes an axial supporting portion formed at the end part of the horizontal supporting portion 3b of the foot bottom supporting portion 3, and rotatably and axially supported by the turning and supporting portion 2e of the base portion 2. Reference numeral 3e denotes a roughly arc-shaped contacting portion formed at the end part of the horizontal supporting portion 3b of the foot bottom supporting portion 3. Reference numeral 4a denotes a sensor fixing hole for fitting and fixing the grounding sensor 4 in the end part of the vertical supporting portion 3a of the foot bottom supporting portion 3. Reference numeral 4b denotes the sensor surface of the grounding sensor 4, 4 c denotes a contact point drilled in the sensor surface 4b of the grounding sensor 4, 4d denotes a grounding portion composed of a hinge-lever type plate spring, one end of which is rockably supported on the sensor surface 4b, which is swayed by the roller 4e disposed at the other end thereof being brought into contact with the grounding surface 20, and is brought into contact with the contact point 4c of the sensor surface for 4b and switching. Reference numeral 4e denotes a roller disposed at the grounding surface 20 side of the other end part of the grounding portion 4d. Reference numeral 4f denotes a connection terminal to electrically connect the grounding sensor 4, 5a denotes an actuator of the lock mechanism 5 which uses a bistable self-retaining type solenoid, and 5b denotes a sliding portion of the actuator 5a vertically moving in line with ON/OFF signals from the grounding sensor 4. Reference numeral 6 denotes a brake portion disposed at the sliding portion 5b of the actuator 5a and formed to be roughly wedge-shaped, which releases the braking of the foot bottom supporting portion 3 (when moving upward), and brakes the same (when moving downward) by vertically sliding, 6a denotes a tapered part formed so that the foot bottom supporting portion 3 side of the lower end of the brake portion 6 is made thinner and thinner (tapered) toward the lower end, which brakes movements of the foot bottom supporting portion 3 by being brought into contact with the contacting portion 3e of the horizontal supporting portion 3b when the brake portion 6 moves downward, and 6b denotes a rear side portion of the brake portion 6. Reference numeral 7 denotes a connection shaft for connecting the sliding portion 5b to the brake portion 6. Reference numeral 8 denotes a brake contacting portion erected at the side portion of the actuator 5a of the lock mechanism 5, 8a denotes a friction material adhered to the brake portion 6 side surface of the brake contacting portion 8.
Herein, the lower end part 3c of the foot bottom supporting portion 3 is formed so that the heel side thereof is made lower, and the roller 4e of the grounding sensor 4 is disposed at the heel side (the base portion 2 side) of the lower end part 3c. Thereby, it is possible to reliably ground the roller 4e of the grounding sensor 4 to the grounding surface 20, wherein switching is enabled by swaying the grounding portion 4d, and the stability in motion of the grounding sensor 4 is excellent.
Further, a sheet material made of synthetic resin or rubber may be used as the friction material 8a. In particular, chloroprene rubber, fluorine rubber, ethylene rubber, nitrile rubber, silicon rubber, etc., which are excellent in wear resistance and friction characteristics, are employed. In particular, it is preferable that chloroprene rubber having high hardness is used. If the hardness of the friction material 8a is low, the friction material 8a is compressed when a braking motion is carried out, and the foot bottom supporting portion 3 will move equivalent to the compression amount, wherein adverse influences may result, for example, the stability in walking motions is worsened.

A description is given below of the motions of the multiple-point grounding type foot portion supporting mechanism according to the first embodiment of the present invention, which is thus constructed.
A description is given, using one set of the foot bottom supporting portions 3 and the lock mechanisms of the multiple-point grounding type foot portion supporting mechanism 1.
First, a braking motion of the foot bottom supporting portion 3 is described.
In FIG. 2B, as the multiple-point grounding type foot portion supporting mechanism 1 moves downward, the roller 4e of the grounding sensor 4 disposed at the lower end part of the foot bottom supporting portion 3 is brought into contact with the grounding surface 20. By the roller 4e being brought into contact with the grounding surface 20, the grounding portion 4d of the grounding sensor 4 turns upward and is brought into contact with the contact point 4c of the sensor surface 4b, wherein the sensor 4 detects grounding of the roller 4e to the grounding surface 20, and emits a signal.
The signal from the grounding sensor 4 is transmitted from the connection terminal 4f to a control section (not shown) through wiring (not shown).
The control section that receives grounding signals from all grounding sensors 4 simultaneously gives an instruction to the actuators 5a of all lock mechanisms 5 so that the movements of the foot bottom supporting portions 3 are braked and are held in that state.
Since the sliding portion 5b of the actuator 5a slides downward, the tapered part 6a of the brake portion 6 is brought into contact with the contacting portion 3e. In addition, the brake portion 6 is pressed to the rear side by the contacting portion 3e, and the rear side portion 6b is brought into contact with the friction material 8a of the brake contacting portion 8, thereby the foot bottom supporting portion 3 is prevented from turning upward centering around the axial supporting portion 3d, thereby braking the movement of the foot bottom supporting portion 3.
By braking the movements of all foot bottom supporting portion 3, four-point grounding of the foot bottom forms a roughly rectangular-shaped supporting polygon. Since the respective foot bottom supporting portions 3 independently operate, the respective foot bottom supporting portions 3 can operate, following the contours and inclination of the grounding surface 20, wherein when all foot bottom supporting portions 3 are grounded, the movements of all foot bottom supporting portions 3 are braked, and as soon as the foot bottom supporting portions are grounded, the foot bottom supporting portions 3 form a supporting polygon, and can reliably support the leg portion.
Further, before a braking motion of the foot bottom supporting portions 3, clearance is slightly formed between the rear side portion 6b of the brake portion 6 and the friction material 8a of the brake contacting portion 8 as depicted in FIG. 2A, wherein the brake portion 6 and the friction material 8a are disposed and are spaced from each other. Therefore, the rear side portion 6b is brought into contact with the friction material 8a on the way of descending of the brake portion 6, thereby preventing the descending motion from being hindered. Also, when the brake portion 6 descends to a predetermined position and is brought into contact with the contacting portion 3e, the brake portion 6 is pressed by the contacting portion 3e. Since the brake portion 6 is idly attached to the connection shaft 7, the rear side portion 6b is brought into contact with the friction material 8a by pressing.

Next, a description is given of a brake-releasing motion of the foot bottom supporting portion 3.
As the multiple-point grounding type foot portion supporting mechanism 1 moves upward, the roller 4e of the grounding sensor 4 disposed at the lower end part 3c of the foot bottom supporting portion 3 sways downward along with the grounding portion 4d by a springing property of the grounding portion 4d and is reset to the initial position. Also, as the lower end part 3c of the foot bottom supporting portion 3 is separated from the grounding surface 20, the foot bottom supporting portion 3 turns downward due to its self weight centering around the axial supporting portion 3d, wherein the tapered part 6a of the brake portion 6 is separated from the contacting portion 3e of the foot bottom supporting portion 3, and at the same time, the rear side portion 6b is separated from the friction material 8a of the brake contacting portion 8.
Since the grounding portion 4d of the grounding sensor 4 and the contact point 4c of the sensor surface 4b are brought into a non-contact state, the signals transmitted from the respective grounding sensors 4 to the control section are discontinued.
When signals from all grounding sensors 4 are discontinued, the control section gives an instruction to the actuators 5a of all lock mechanisms 5 so that the braking of the foot bottom supporting portion 3 is released, and the sliding portion 5b of the actuator 5a is caused to slide upward.
Thus, braking of the foot bottom supporting portion 3 is canceled.

With reference to the drawings, a description is given of a biped walking robot equipped with the multiple-point grounding type foot portion supporting mechanism according to the first embodiment of the present invention, which is constructed as described above.

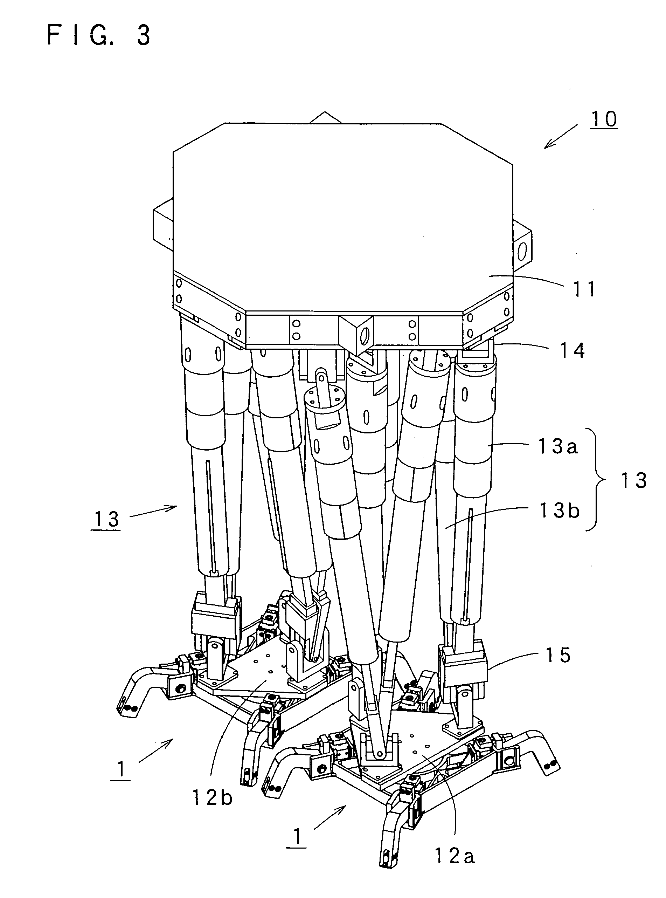

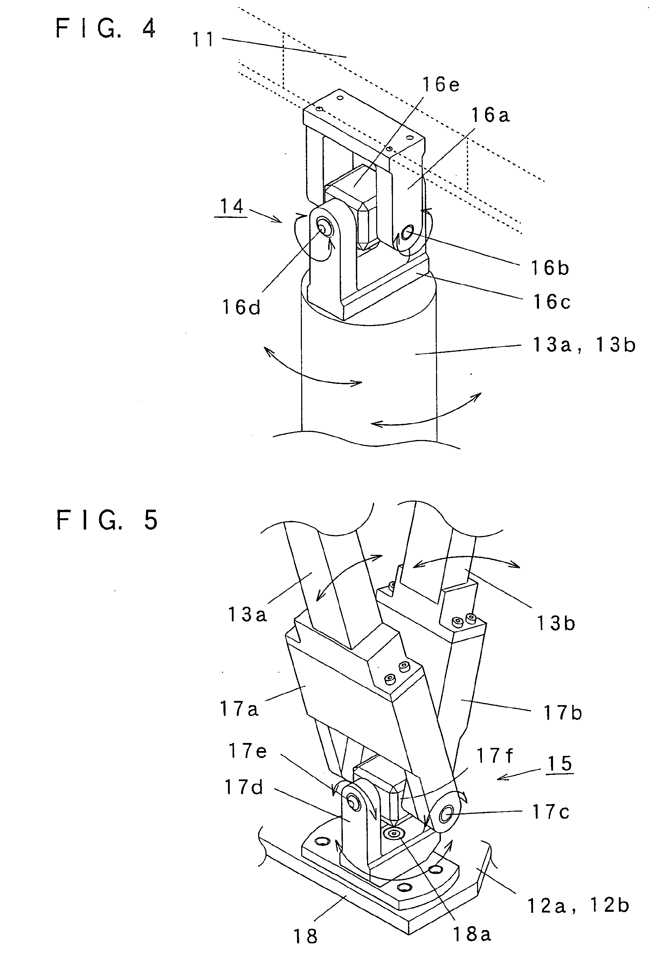

FIG. 3 is a perspective view depicting a biped walking robot equipped with the multiple-point grounding type foot portion supporting mechanism according to the first embodiment of the present invention. FIG. 4 is a perspective view of the major parts, depicting the passive joint of the base portion. FIG. 5 is a perspective view of the major parts, depicting the passive joint of the foot portion.
In the drawings, reference numeral 10 denotes a biped walking robot equipped with the multiple-point grounding type foot portion supporting mechanism 1 according to the first embodiment of the present invention. Reference numeral 11 denotes a base portion of the biped walking robot 10. Reference numerals 12a and 12b denote left and right foot portions of the biped walking robot 10, each of which has the multiple-point grounding type foot portion supporting mechanism 1 disposed on a roughly triangular-shaped foot bottom. Reference numeral 13 denotes a parallel link mechanism portion of the biped walking robot 10, in which two direct-acting links 13a and 13b are disposed to be V-shaped as a set. Reference numeral 14 denotes base portion passive joints, having two degrees of freedom, which are linked with the upper ends of three sets of the parallel linkmechanismportions 13 symmetrically disposed three by three at the left and right sides of the base portion 11. Reference numeral 15 denotes foot portion passive joints, having three degrees of freedom, which are linked with the lower ends of three sets of parallel link mechanism portions 13 symmetrically disposed three by three at the left and right foot portions 12a and 12b, respectively.
In FIG. 4, reference numeral 16a denotes a channel-shaped base portion upper joint fixed at the lower part of the base portion 2, 16b denotes an upper part joint axis bridged between the erected sides opposed to each other at the base portion upper part joint 16a, 16c denotes a channel-shaped base portion lower part joint fixed at the upper end part of the direct-acting links 13a and 13b, 16d denotes a lower part joint axis for rotatably and axially supporting the base portion lower joint 16c bridged between the erected sides opposed to each other at the base portion lower joint 16c, and 16e denotes a linkage turning portion for setting the upper part joint axis 16b and the lower part joint axis 16d orthogonal to each other and linking them together.
In FIG. 5, reference numeral 17a denotes a channel-shaped first foot portion upper joint linked with the lower end part of the direct-acting link 13a, 17b denotes a channel-shaped second foot portion upper joint linked with the lower end part of the direct-acting link 13b, 17c denotes an upper part joint axis that is bridged between the erected sides opposed to each other at the first foot portion upper joint 17a and the second foot portion upper joint 17b, links the first foot portion upper joint 17a with the second foot portion upper joint 17b, and rotatably axially supports the foot portion upper joints 17a and 17b, 17d denotes a channel-shaped foot portion lower joint linked with the foot portions 12a and 12b via a base portion described later, 17e denotes a lower part joint axis bridged between the erected sides opposed to each other at the foot portion lower joint 17d, and 17f denotes a linkage turning portion for setting and linking the upper part joint axis 17c and the lower part joint axis 17e orthogonal to each other. Reference numeral 18 denotes a base portion fixed at the foot portions 12a and 12b, and 18a denotes a base portion axis for rotatably and axially supporting the foot portion lower joint 17d to the base portion 18.

As depicted in FIG. 4, the base portion lower joint 16c turns in the axis-circumferential direction of the upper part joint axis 16b and the lower part joint axis 16d with respect to the base portion upper joint 16a. Accordingly, since the base portion passive joint 14 has two degrees of freedom in the axis-circumferential direction of the upper part joint axis 16b and the lower part joint axis 16d, which are orthogonal to the lengthwise direction of the direct-acting links 13a and 13b, the base portion passive joint 14 follows extension and contraction of the direct-acting link 13, and is smoothly driven without hindering the extension and contraction thereof.
Also, as depicted in FIG. 5, the first foot portion upper joint 17a and the second foot portion lower joint 17b turn in the axis-circumferential direction of the upper part joint axis 17c and the lower part joint axis 17e with respect to the foot portion lower joint 17d. In addition, the foot portion lower joint 17d turns in the axis-circumferential direction of the base portion axis 18a with respect to the base portion 18. Accordingly, since the foot portion passive joint 15 has two degrees of freedom in the axis-circumferential direction of the upper part joint axis 17c and the lower part joint axis 17e, which are orthogonal to the lengthwise direction of the direct-acting links 13a and 13b, and at the same time, has one degree of freedom in the axis-circumferential direction of the base portion axis 18a in the axial direction of the direct-acting links 13a and 13b, the foot portion passive joint 15 follows extension and contraction of the direct-acting links 13a and 13b and is smoothly driven without hindering the extension and contraction thereof.

Since the biped walking robot 10 is composed of a Stewart platform having the respective parallel link mechanism portion 13 provided, in which two direct-acting links 13a and 13b are disposed to be V-shaped as one set, and three sets thereof are provided, the biped walking robot 10 is excellent in stability and rigidity, and its control motion can be simplified. Further, the direct-acting links 13a and 13b are used as links of the parallel link mechanism portion 13, and the base portion passive joint 14 and the foot portion passive joint 15 are also used as the passive joints, wherein, since the respective direct-acting links 13a and 13b can be extended and contracted in the axial directions thereof, the direct-acting links 13a and 13b do not interfere with each other, and downsizing thereof can be achieved.
As the base portion passive joint 14 and the foot portion passive joint 15, a universal joint, a ball joint, a two-axis axial joint or a combination thereof with one-axis or two-axis axial joint may be used in addition to those depicted in FIG. 4 and FIG. 5. Also, where the universal joint is used, it is preferable because the movable area thereof can be further widened in comparison with the ball joint.
Further, the respective parallel link mechanism portions 13 used for the left and right leg portions are symmetrically disposed at both sides of the base portion 11, and the direct-acting links 13a and 13b used for the parallel link mechanism portion 13 are symmetrically disposed at the left and right legs as well. Accordingly, the ZMP control to carry out walking motion control is enabled, and excellent stability is brought about in walking motions.

With reference to the drawings, a description is given of a control structure for a biped walking robot equipped with the multiple-point grounding type foot portion supporting mechanism according to the first embodiment of the present invention, which is constructed as described above.

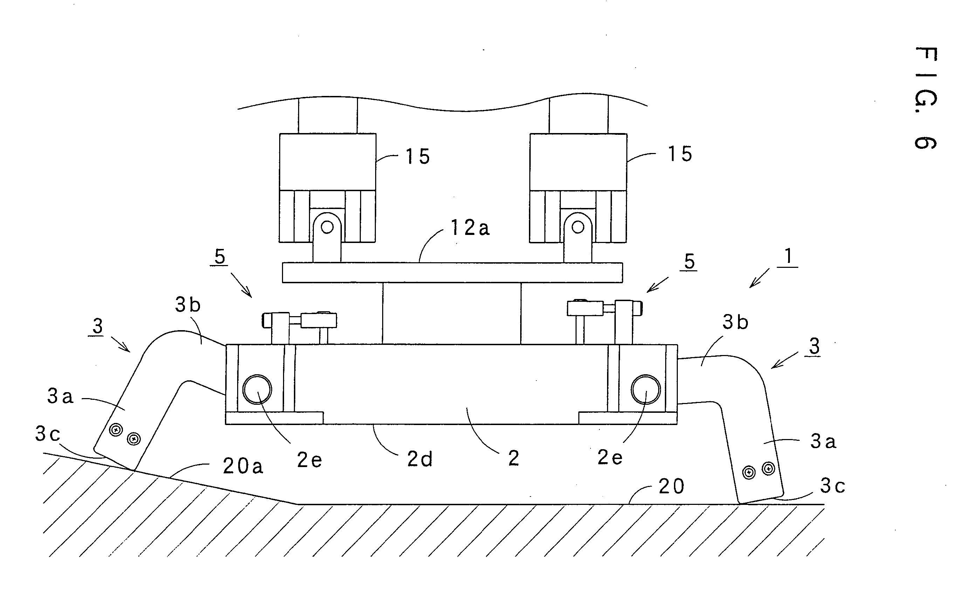

FIG. 6 is an enlarged side view of the foot portion, depicting a walking state of a biped walking robot equipped with the multiple-point grounding type foot portion supporting mechanism.
In FIG. 6, reference numeral 20a denotes an inclination surface of the grounding surface 20.
When a biped walking robot 10 equipped with the multiple-point grounding type foot portion supporting mechanism 1 at the left and right foot portions 12a and 12b, respectively, walks on the grounding surface 20 having an inclination surface 20a, the lock mechanism 5 brakes movements of all foot bottom supporting portions 3 when the grounding sensor 4 detects that all foot bottom supporting portions 3 of the multiple-point grounding type foot portion supporting mechanism 1 are grounded on the grounding surface 20 (20a) with respect to the left and right foot portions 12a and 12b.
Accordingly, even where the grounding surface 20 has an inclination surface 20a, the foot portions 12a and 12b form a virtual supporting polygon on the grounded foot bottoms and are supported at multiple points. Even in a state where only either one of the left or right foot portions 12a or 12b is grounded when the biped walking robot 10 walks, the biped walking robot 10 can be securely supported by the grounded foot portion 12a (or 12b). The control section (not shown) carries out ZMP control to ensure stable walking.
In addition, when the grounding sensor 4 detects that all foot bottom supporting portions 3 of the multiple-point grounding type foot portion supporting mechanism 1 are separated from the grounding surface 20(20a), the lock mechanism 5 is released to unlock the braking of all foot bottom supporting portions 3.
Accordingly, the center of gravity is shifted to a securely grounded foot portion 12a (or 12b) based on the ZMP control at the timing when a virtual supporting polygon is formed on the foot bottom of the grounded foot portion 12a (or 12b), and the foot portion 12a (or 12b) is supported at polygonal points,
wherein the stability in walking motions can be improved.

With the multiple-point grounding type foot portion supporting mechanism according to the first embodiment as described above, the following actions can be brought about.
(1) Since the end part is disposed and protruding downward from the bottom face 2d of the base portion 2 disposed on the foot bottom of the walking robot and four foot bottom supporting portions 3 are provided, which independently turn upward when being grounded and are rotatably supported, the respective foot bottom supporting portions 3 move in the direction along which the protrusion amount from the foot bottom (the bottom face of the base portion) is reduced, passively following the contour of the grounding surface 20. Therefore, the lock mechanism 5 controls and brakes movement of all foot bottom supporting portions 3 when the grounding sensors 4 detect the grounding of all foot bottom supporting portions 3, wherein the foot bottoms are supported at polygonal points at an area equivalent to a case where the grounding surface is flat. Accordingly, it is possible to securely support the leg portions of the walking robot and to prevent it from falling over.
(2) Since the respective foot bottom supporting portions 3 are grounded passively following the contour of the grounding surface 20, the base portion 2 of the foot bottom can always be made horizontal (or kept at a fixed angle to the horizontality) even if there is any inclination surface 20a or unevenness on the grounding surface 20, and it is possible to control the position and posture of the main body and waist and foot bottom of the walking robot as per setting in line therewith, and stable walking can be carried out.
(3) Since the grounding of the respective foot bottom supporting portions 3 can be individually detected by the grounding sensor 4 disposed at the respective foot bottom supporting portions 3, it is possible to securely confirm the grounding of all foot bottom supporting portions 3, wherein it is possible to control and brake the movements of all foot bottom supporting portions 3 by means of the lock mechanism 5.
(4) Since the foot bottom supporting portions 3 are rotatably supported on the base portion 2, the lower end part 3c of the foot bottom supporting portions 3 can easily and securely cause the respective foot bottom supporting portions 3 to turn upward of the foot bottom, without depending on the contour of the grounding surface 20, when the lower end part 3c of the foot bottom supporting portion 3 is grounded on the grounding surface 20. Therefore, the foot bottom is not caught by any convex part on the grounding surface 20, wherein it is possible to control and brake the movements of all foot bottom supporting portions 3 by means of the lock mechanism 5, and it is possible to support the foot bottom at polygonal points at an area equivalent to a case where the grounding surface is flat.
(5) Since the foot bottom supporting portion 3 is disposed at the base portion 2, it is possible to integrally handle the foot portion supporting mechanism 1, wherein the foot bottom supporting portion 3 can be easily attached to the foot bottom of a leg portion of the existing biped walking robot, etc., via the 6-axis force sensor accommodated in the force sensor accommodating portion 2a of the base portion 2, and it is possible to improve the stability in walking motions of the walking robot.
(6) Since four foot bottom supporting portions 3 are provided, a supporting polygon of an area equivalent to a case where the grounding surface is flat is formed on the foot bottom even if there is any inclination surface 20a or unevenness on the grounding surface 20, and polygonal point supporting is secured. Therefore, the leg portion of the walking robot can be stably supported, and the multiple-point grounding type leg supporting mechanism can be preferably employed particularly for biped walking robots.
(7) Where the end parts of the foot bottom supporting portions 3 are disposed with equal intervals therebetween on the same circumference so that the distance from the end parts to the center of the base portion 2 becomes equidistant, since the supporting polygon formed by the foot bottom supporting portions 3 becomes a regular square, it is possible to uniformly support the leg portion by the respective foot bottom supporting portions 3, wherein the stability in grounding can be improved.
(8) Since the 6-axis force sensor is disposed at the base portion 2, the sensor can detect reaction forces from the grounding surface 20 such as a floor, and a road surface if the sensor is attached to the foot bottom of the foot portion of a walking robot, and it is possible to measure the position of the ZMP (Zero Moment Point) based on the detection value, wherein the ZMP control can be carried out by a simple structure.
(9) The foot bottom supporting portion 3 has a vertical supporting portion 3a one end part 3c of which is grounded, and a horizontal supporting portion 3b extending in a roughly horizontal direction from the upper end part of the vertical supporting portion 3a, and is rotatably axially supported by the turning and supporting portion 2e formed at the base portion 2 at the axial supporting portion 3d formed at the end part of the horizontal supporting portion 3b. Therefore, the respective foot bottom supporting portions 3 turn with the axial supporting portion 3d used as a fulcrum when the lower end part 3c of the vertical supporting portion 3a of the foot bottom supporting portion 3 is grounded, and the respective foot bottom supporting portions 3 can move (upward) in the direction along which the protrusion amount from the foot bottom is reduced, passively following the contours of the grounding surface 20, wherein a virtual supporting polygon is formed, and polygonal point supporting can be achieved.
(10) The grounding sensor 4 is disposed at the lower end part 3c of the vertical supporting portion 3a of the foot bottom supporting portion 3. Therefore, when the lower end part 3c of the vertical supporting portion 3a of the foot bottom supporting portion 3 is grounded on the grounding surface 20 such as a road surface, it is possible to directly detect whether or not the lower end part 3c is grounded. Accordingly, it is possible to further securely recognize the grounding, wherein the lock mechanism 5 can be prevented from erroneous operation, and the leg portion can be supported in a stable manner.
(11) Since a roughly arc-shaped contacting portion 3e is formed at the end part of the horizontal supporting portion 3b of the foot bottom supporting portion 3, and the lock mechanism 5 is provided with the brake portion 6 having the tapered part 6a formed at its lower end, and an actuator 5a linked with the brake portion 6, the sliding portion 5b is caused to slide in the up and down directions by the actuator 5a of the lock mechanism 5 when the foot bottom supporting portion 3 is grounded, wherein the tapered part 6a of the brake portion 6 is brought into contact with the contacting portion 3e of the foot bottom supporting portion 3, and at the same time, the rear side portion 6b is brought into contact with the friction material 8a of the brake contacting portion 8. Therefore, since the brake portion 6 is fitted, like a wedge, between the contacting portion 3e and the brake contacting portion 8, movements of the foot bottom supporting portion 3 can be securely braked, and the leg portion can be supported in a stable state.
(12) Since the contacting portion 3e of the horizontal supporting portion 3b of the foot bottom supporting portion 3 is formed to be roughly arc-shaped, and the tapered part 6a of the brake portion 6 of the lock mechanism 5 is formed thinner and thinner toward to the distal end thereof, it is possible to securely bring the tapered part 6a of the brake portion 6 into contact with the contacting portion 3e of the horizontal supporting portion 3b regardless of the turning amount of the foot bottom supporting portion 3, wherein the foot bottom supporting portion 3 is prevented from turning, and can be braked.
(13) Since the actuator 5a is disposed so as to cause the brake portion 6 to slide in the up and down direction, it is possible to make the installation space of the lock mechanism 5 narrow, wherein the space-saving property is excellent, and it is possible to attempt to downsize and lighten the multiple-point grounding type foot portion supporting mechanism 1.
(14) Since a bistable self-retaining type solenoid capable of actuating the brake portion 6 in both up and down directions is employed as the actuator 5a, the absorption force of the solenoid can be used in both braking by the brake portion 6 (descending) and releasing the brake (ascending), wherein the brake portion 6 can be vertically moved at a high speed, and the solenoid can contribute to downsizing, lightening in weight and a space-saving property.
(15) Since the friction material 8a is adhered to the brake contacting portion 8, the brake portion 6 is prevented from slipping and coming off even if a large load or impact is applied when the foot bottom supporting portion 3 is braked, wherein reliability and stability are excellent.

With a biped walking robot equipped with the multiple-point grounding type foot portion supporting mechanism according to the first embodiment, the following actions can be brought about.
(16) Since the biped walking robot is provided with parallel link mechanism portions 13 disposed between the base portion 11 and the left foot portion 12a and between the base portion 11 and the right foot portion 12b, and the multiple-point grounding type foot portion supporting mechanism 1 is disposed on the foot bottom of the left and right foot portions 12a and 12b, respectively, a virtual supporting polygon having an area equivalent to a flat grounding surface can be formed on the foot bottom even on a complicated grounding surface, which has unevenness or level differences, by the multiple-point grounding type foot portion supporting mechanism 1 of the foot portion 12a (or 12b), grounded in walking, of the left and right foot portions 12a and 12b, wherein the leg portions of the biped walking robot 10 can be securely supported. Therefore, it is possible to continue stable walking while preventing the walking robot from falling over.
(17) That is, where ZMP control of a biped walking robot is carried out, since a walking pattern is usually set so that the ZMP exists in a supporting polygon where it is assumed that the grounding surface is a horizontal flat plane, the supporting polygon recognized by the walking robot greatly differs from the actual supporting polygon where, with a prior art rigid flat foot bottom, the robot steps on an inclination surface of the grounding surface or an uneven (convex and concave) place thereof, and the ZMP comes off from the actual supporting polygon, wherein the error is accumulated through two or three steps even if the ZMP does not come off with only one step, the walking becomes unstable, and finally the robot falls over. As in the first embodiment, since the respective foot bottom supporting portions 3 can be grounded, passively following the grounding surface 20, the supporting polygon recognized by the biped walking robot 10 can always be made roughly coincident with an actual supporting polygon even if there is an inclination surface 20a or unevenness on the grounding surface 20, and the biped walking robot 10 can carry out stable walking as per set walking pattern.
(18) Since the parallel link mechanism portion 13 is provided between the base portion passive joint 14 disposed at the base portion 11 and the foot portion passive joint 15 disposed at the left and right foot portions 12a and 12b, respectively, the respective parallel link mechanism portions 13 are composed of a Stewart platform, in which two direct-acting links 13a and 13b are disposed to be V-shaped as one set and three sets thereof are provided. Therefore, the biped walking robot 10 is excellent in stability and rigidity, and its control motion can be simplified.
(19) Since the direct-acting links 13a and 13b are employed in the parallel link mechanism portion 13, the respective direct-acting links 13a and 13b extend and contract in the axial directions thereof, and do not interfere with each other, wherein the biped walking robot 10 can be downsized.
(20) The parallel link mechanism portions 13 have six degrees of freedom, respectively, wherein the left and right foot portions 12a and 12b can carry out diversified motions, and walking motions thereof can be smoothly carried out.
(21) Since the parallel link mechanism portions 13 of the left and right foot portions 12a and 12b are symmetrically disposed, and the respective parallel link mechanism portions 13 have six degrees of freedom, walking control is carried out in walking motions so that no moment is applied in the axis-circumferential direction of the waist axis of the biped walking robot 10, and in walking motions, the base portion 11 is prevented from turning in the axis-circumferential direction of the waist axis, wherein stable walking is ensured.

With the control structure for the biped walking robot according to the first embodiment, the following actions can be brought about.
(22) With respect to the left and right foot portions 12a and 12b, respectively, when the grounding sensors 4 detect that all foot bottom supporting portions 3 of the multiple-point grounding type foot portion supporting mechanism 1 are grounded on the grounding surface 20 (20a) such as a road surface, movements of all foot bottom supporting portions 3 are braked by the lock mechanism 5, and a virtual supporting polygon is formed on the foot bottom of the grounded foot portions 12a (or 12b). Therefore, even in a state where only either of the left and right foot portions 12a or 12b is grounded when the biped walking robot 10 walks, the biped walking robot 10 can be securely supported by the grounded foot portion 12a (or 12b), and the ZMP control is carried out to ensure stable walking. (23) With respect to the left and right foot portions 12a and 12b, respectively, when the grounding sensors 4 detect that all foot bottom supporting portions 3 of the multiple-point grounding type foot portion supporting mechanism 1 are grounded on the grounding surface 20(20a) such as a road surface, the lock mechanism 5 brakes movement of all foot bottom supporting portions 3, and when the grounding sensors 4 detect that all foot bottom supporting portions 3 of the multiple-point grounding type foot portion supporting mechanism 1 are separated from the grounding surface 20 (20a) such as a road surface, the lock mechanism 5 is released to cancel the braking of all foot bottom supporting portions 3. Therefore, the center of gravity is securely shifted to the grounded foot portion 12a (or 12b) at the timing when a virtual supporting polygon is formed on the foot bottom of the grounded foot portion 12a (or 12b), and stability in walking motions can be improved, wherein it is possible to prevent the biped walking robot 10 from falling over.

With reference to the drawings, a description is given of a multiple-point grounding type foot portion supporting mechanism according to the second embodiment of the present invention.

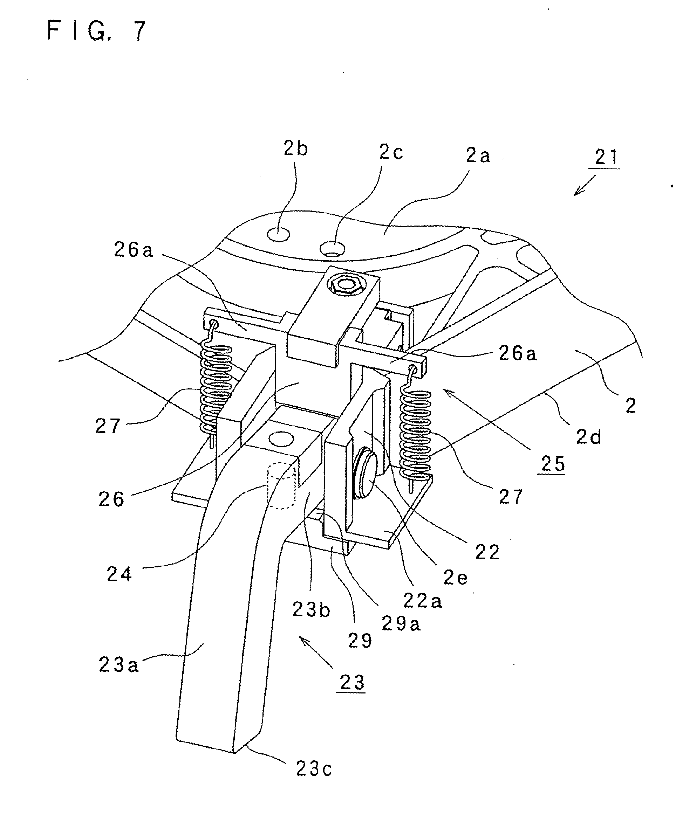

FIG. 7 is a perspective view of the major parts, depicting a foot bottom supporting portion and a lock mechanism of a multiple-point grounding type foot portion supporting mechanism according to the second embodiment.
In FIG. 7, reference numeral 2 denotes a base portion, 2a denotes a force sensor accommodating portion, 2b denotes a positioning hole, 2c denotes a bolt insertion hole, 2d denotes a bottom face, and 2e denotes a turning and supporting portion. These components are similar to those described in the first embodiment, wherein the same reference numerals are given thereto, and a description thereof is omitted. Reference numeral 21 denotes a multiple-point grounding type foot portion supporting mechanism according to the second embodiment. Reference numeral 22 denotes a holding portion having a rear wall and a pair of side walls erected at the bottom wall portion described later disposed at four corners of the base portion 2, the plan view of which is made channel-shaped, wherein the turning and supporting portion 2e is inserted into and fitted in the holes formed on the respective side walls. Reference numerals 22a denotes a resilient body lower part fixing portion formed so as to protrude outside from the lower end part of the respective side walls of the holding portion 22. Reference numeral 23 denotes a foot bottom supporting portion that has a vertical supporting portion 23a and a horizontal supporting portion 23b, is formed to be roughly L-shaped, and in which the end part of the horizontal supporting portion 23b is axially rotatably supported at the turning and supporting portion 23e. Reference numeral 23c denotes a lower end part of the vertical supporting portion 23a. Reference numeral 24 denotes a grounding sensor disposed at the horizontal supporting portion 23b. Reference numeral 25 denotes a lock mechanism disposed at four corners of the base portion 2. Reference numeral 26 denotes a brake portion disposed at the sliding portion of an actuator described later, wherein 26a denotes a resilient body upper part fixing portion protruding from the upper end part of the brake portion 26 to both side portions. Reference numeral 27 denotes a resilient body such as a tension spring and a tension coil spring, which is disposed at both side portions of the brake portion 26, the upper end part of which is fixed at the resilient body upper part fixing portion 26a, and the lower end part of which is fixed at the resilient body lower part fixing portion 22a. Reference numeral 29 denotes a bottom wall portion integrally formed at four corners of the base portion 2, and reference numeral 29a denotes a sensor contacting portion protruding upward of the distal end part of the bottom wall portion 29.

Next, a detailed description is given of the foot bottom supporting portion and the lock mechanism.

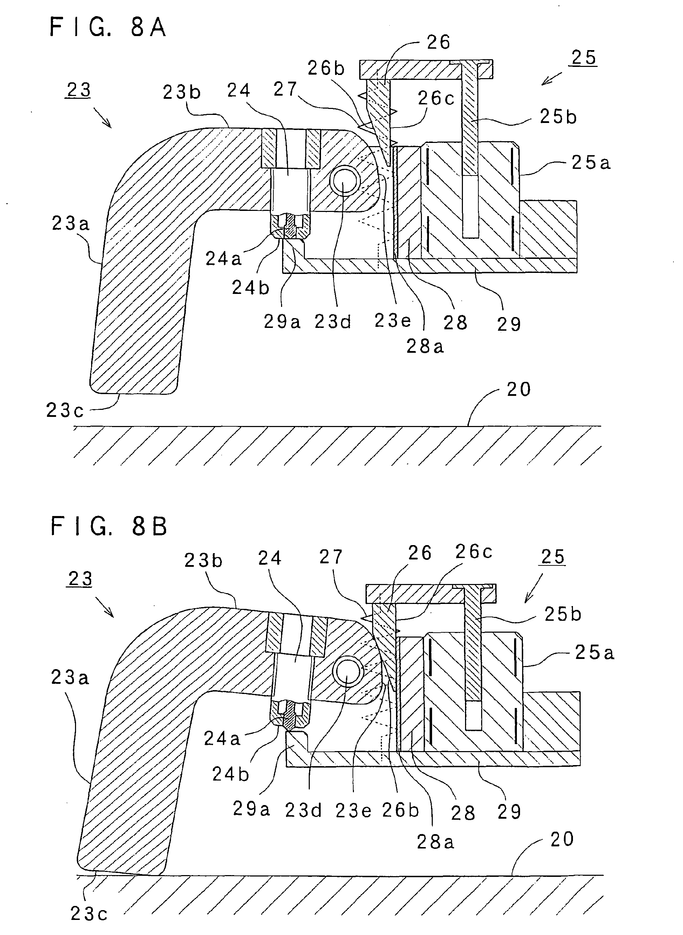

FIG. 8A is a sectional side view of the major parts, depicting the foot bottom supporting portion and the lock mechanism, and FIG. 8B is a sectional side view depicting a fixed state of the foot bottom supporting portion.
In FIG. 8, reference numeral 23d denotes an axial supporting portion that is formed in the vicinity of the end part of the horizontal supporting portion 23b of the foot bottom supporting portion 23, and axially supported rotatably by the turning and supporting portion 2e, reference numeral 23e denotes a roughly arc-shaped contacting portion formed at the end part of the horizontal supporting portion 23b of the foot bottom supporting portion 23. Reference numeral 24a denotes a movable portion retractably disposed at the lower end surface 24b of the grounding sensor 24. The movable portion 24a is pressed in the direction protruding from the lower end face 24b by the resilient body (not shown), wherein if the movable portion 24a is pressed inwardly of the grounding sensor 24, the rear end part thereof is brought into contact with the contact point (not shown), thereby executing switching. Reference numeral 25a denotes an actuator of the lock mechanism 25 using a solenoid, 25b denotes a sliding portion of the actuator 25a, which vertically slides in line with ON/OFF signals from the grounding sensor 24, and 26b denotes a tapered part tapered and formed at the lower end of the brake portion 6. Reference numeral 26c denotes a rear side portion of the brake portion 26. Reference numeral 28 denotes a brake contacting portion formed by the rear wall of the holding portion 22, and 28a denotes a friction material adhered to the face at the brake portion 26 side of the brake contacting portion 28.
Also, the friction material similar to the friction material 8a described in the first embodiment may be employed as the friction material 28a.

With regard to the multiple-point grounding type foot portion supporting mechanism according to the second embodiment, which is constructed as described above, a description is given below of the braking motion and releasing braking motion thereof.
First, a description is given of the braking motion of the foot bottom supporting portion 23.
As depicted in FIG. 8A, before the lower end part 23c of the foot bottom supporting portion 23 is grounded, the lower end surface 24b of the grounding sensor 24 is in contact with the sensor contacting portion 29a, and the movable portion 24a is accommodated in the grounding sensor 24. In this state, a signal which informs of the contact point being in contact is transmitted from the grounding sensor 24 to the control section (not shown). Also, the resilient body 27 is extended and contracted between the resilient body upper part fixing portion 26a and the resilient body lower part fixing portion 22a, wherein a restoration force is applied in the direction along which the brake portion 26 is oriented downward.
As the multiple-point grounding type foot portion supporting mechanism 21 descends, the lower end part 23c of the foot bottom supporting portion 23 is brought into contact with the grounding surface 20. When the multiple-point grounding type foot portion supporting mechanism 21 further descends, the foot bottom supporting portion 23 turns upward centering around the axial supporting portion 23d as depicted in FIG. 8B, and the lower end surface 24b of the grounding sensor 24 is spaced from the sensor contacting portion 29a, wherein the movable portion 24a protrudes from the grounding sensor 24.
Therefore, the contact point of the grounding sensor 24 reaches a non-contact state, where the signal transmitted from the grounding sensor 24 to the control section is interrupted. The control section having detected that the signals of all grounding sensors 4 are interrupted (that is, the lower end parts 23c of all foot bottom supporting portions 23 are grounded on the grounding surface 20) simultaneously gives to the actuators 25a of all lockmechanisms 25 an instruction of causing the states of the foot bottom supporting portions 23 to be held by braking the movements thereof.
Then, the brake portion 26 slides downward along with the sliding portion 25b of the actuator 25a, and the tapered part 26b of the brake portion 26 is brought into contact with the contacting portion 23e. In addition, the brake portion 26 is pressed to the rear side by the contacting portion 23e, and the rear side portion 26c is brought into contact with the friction material 28a of the brake contacting portion 28. At this time, since the brake portion 26 quickly slides downward by the restoration force of the resilient body 27 which has been extended, a braking motion is quickly carried out. Accordingly, the foot bottom supporting portion 23 is prevented from turning upward, centering around the axial supporting portion 23d, and motions of the foot bottom supporting portion 23 are braked. Also, by adjusting the length and the distance between the resilient body upper part fixing portion 26a and the resilient body lower part fixing portion 22a so that, even in a state where the brake portion 26 slides downward, the resilient body 27 is extended and its restoration force operates, it is possible to press the tapered part 26a of the brake portion 26 to the contacting portion 23e of the foot bottom supporting portion 3 by the restoration force of the resilient body 27.

Next, a description is given of a brake-releasing motion of the foot bottom supporting portion 3.
When the multiple-point grounding type foot portion supporting mechanism 21 ascends, the lower end part 23c of the foot bottom supporting portion 23 is separated from the grounding surface 20, and as depicted in FIG. 8A, the foot bottom supporting portion 23 turns downward by its self-weight, centering around the axial supporting portion 23d, and the tapered part 26b of the brake portion 26 is separated from the contacting portion 23e of the foot bottom supporting portion 23. Simultaneously, the rear side portion 26c is separated from the friction material 28a of the brake contacting portion 28. In addition, the movable portion 24a of the grounding sensor 24 is brought into contact with the sensor contacting portion 29a, and is accommodated in the grounding sensor 24, thereby the contact point of the grounding sensor 24 reaches a contacted state, and a signal informing of the contact point being contacted is transmitted to the control section.
The control section having detected that signals have been transmitted from all grounding sensors 24 (that is, the lower end parts 23c of all foot bottom supporting portions 23 are separated from the grounding surface 20) simultaneously gives to the actuator 25a of all lockmechanisms 25 an instruction of releasing the braking of the foot bottom supporting portions 23, and the brake portion 26 slides upward along with the sliding portion 25b of the actuator 25a.
Thus, the braking of the foot bottom supporting portion 23 is released. Also, since the brake portion 26 slides upward, the resilient body 27 is extended. Since the operation force of the actuator 25a is sufficiently greater than the restoration force produced by extension of the resilient body 27, the resilient body 27 is easily extended.

Since the multiple-point grounding type foot portion supporting mechanism according to the second embodiment is constructed as described above, the following actions can be brought about in addition to those of the first embodiment.
(1) Since the grounding sensor 24 is disposed at the horizontal supporting portion 23b of the foot bottom supporting portion 23, and it is possible to detect turning of the foot bottom supporting portion 23 based on grounding of the lower end part 23c of the foot bottom supporting portion 23, the grounding sensor 24 operates if any part of the inside (the base portion 2 side) and the outside of the lower end part 23c, etc., is grounded. Therefore, the grounding sensor 24 can securely operate regardless of the shape of the grounding surface 20 and existence of obstacles such as gravel, etc., wherein reliability in operation and stability can be improved.
(2) Since the resilient body 27 composed of a tension coil spring, etc., is disposed between the brake portion 26 and the holding portion 22 (fixed at the base portion 2), the brake portion 26 quickly slides downward in a braking motion by the restoration force of the resilient body 27 extended in a releasing motion of the braking, and the braking motion can be quickly carried out, wherein the response speed is improved.
(3) By adjusting the resilient body 27 so that the restoration force thereof operates even in a braked state, it is possible to always press the tapered part 26b of the brake portion 26 to the contacting portion 3e of the foot bottom supporting portion 3 by the restoration force in a braking motion. Therefore, the foot bottom supporting portion 3 can be firmly locked, wherein reliability and certainty are improved.

### Industrial Applicability

The present invention relates to a multiple-point grounding type foot portion supporting mechanism that forms a virtual supporting polygon in the plane of a foot bottom and supports the foot bottom at multiple points, a biped walking robot equipped with the multiple-point grounding type foot portion supporting mechanism, which is capable of carrying out a stable walking motion, and a control structure therefor. The present invention can provide a multiple-point grounding type foot portion supporting mechanism having excellent reliability, which is capable of quickly supporting the foot bottom at polygonal points and preventing falling over on a grounding surface, even where there is unevenness and an inclination surface, by braking movements of supporting points when all supporting points are grounded, with the respective supporting points of foot portions passively following the contours of the grounding surface such as a road surface, provides a biped walking robot equipped with the multiple-point grounding type foot portion supportingmechanism, which is capable of operating even on a complicated ground shape having unevenness and level differences, etc. , and has excellent stability and versatility in walking motions, and provides a control structure therefor.

## Claims

1. A multiple-point grounding type foot portion supporting mechanism, comprising: base portions each disposed on the foot bottom of a walking robot; three or more foot bottom supporting portions each having its one end part disposed and protruding downward from the bottom face of the base portion, each of which independently moves upward when being grounded and is slidably or rotatably supported; grounding sensors each disposed at the base portion or the respective foot bottom supporting portion, which detect grounding of the respective foot bottom supporting portions; and lock mechanisms disposed at the base portion, which control and brake the movements of all foot bottom supporting portions when the grounding sensors detect grounding of all foot bottom supporting portions.

2. The multiple-point grounding type foot portion supporting mechanism according to Claim 1, wherein the foot bottom supporting portion comprises: a vertical supporting portion grounded at the lower end part thereof; a horizontal supporting portion extending from the upper end part of the vertical supporting portion roughly in the horizontal direction; and an axial supporting portion formed at the other end part of the horizontal supporting portion; and wherein the base portion includes a turning and supporting portion for axially rotatably supporting the axial supporting portion of the respective foot bottom supporting portions.

3. The multiple-point grounding type foot portion supporting mechanism according to Claim 2, wherein the grounding sensor is disposed at the lower end part of the vertical supporting portion of the foot bottom supporting portion.

4. The multiple-point grounding type foot portion supporting mechanism according to Claim 2, wherein the grounding sensor is disposed at the lower part of the horizontal supporting portion of the foot bottom supporting portion, and simultaneously includes a sensor-contacting portion fixed at the base portion and disposed downward of the grounding sensor.

5. The multiple-point grounding type foot portion supporting mechanism according to any one of Claims 2 through 4, wherein the respective foot bottom supporting portions have a roughly arc-shaped contacting portion formed at the other end part of the horizontal supporting portion, and the lock mechanism includes (a) a brake portion in which a tapered part brought into contact with the contacting portion of the respective foot bottom supporting portions and widened upward is formed at the one end thereof, and (b) an actuator linked with the other end of the brake portion for causing the brake portion to slide in the up and down directions.

6. The multiple-point grounding type foot portion supporting mechanism according to Claim 5, comprising: a resilient body upper part fixing portion, which is disposed in the brake portion; a resilient body lower part fixing portion which is disposed on the base portion; and a resilient body the upper end part of which is fixed at the resilient body upper part fixing portion, and the lower end part of which is fixed at the resilient body lower part fixing portion.

7. A biped walking robot comprising: left and right foot portions; and a multiple-point grounding type foot portion supporting mechanism, according to any one of Claims 1 through 6, which is disposed on the foot bottom of the left and right foot portions.

8. A control structure for a biped walking robot walking by moving the left and right foot portions up and down, having: left and right foot portions; multiple-point grounding type foot portion supporting mechanism each disposed at the foot bottom of the left foot portion and the right foot portion; and comprising: three or more foot bottom supporting portions in which the multiple-point grounding type foot portion supporting mechanisms have one end part thereof disposed on and protruding from the foot bottom, and the protrusion amounts thereof are independently and passively reduced when being grounded; grounding sensors for detecting the grounding of the respective foot bottom supporting portions; and lock mechanisms for braking movements of the respective foot bottom supporting portions; wherein when the grounding sensors detect, with respect to the left and right foot portions, that all foot bottom supporting portions of the multiple-point grounding type foot portion supporting mechanisms are grounded on the grounding surface such as a road surface, movements of all foot bottom supporting portions are braked by the lock mechanisms, the foot bottoms of the grounded foot portions are supported at polygonal points, and simultaneously, when the grounding sensors detect that all foot bottom supporting portions of the multiple-point grounding type foot portion supporting mechanism are separated from the grounding surface such as a road surface, the lock mechanisms are released to unlock the braking of all foot bottom supporting portions.
